# EUROPEAN PATENT SPECIFICATION

(11) **EP 0 203 764 B1**
(45) Date of publication and mention of the grant of the patent: **24.03.1993**
(21) Application number: 86303757.8
(22) Date of filing: 16.05.1986
(51) Int. Cl.: C07B 59/00, C07F 3/12, C07F 7/22, A61K 49/02

(54) **Radiohalogenated small molecules for protein labeling**
Radiohalogenierte kleine Moleküle für das Markieren von Proteinen
Petites molécules radiohalogénées pour le marquage de protéines

(30) Priority: 17.05.1985 US 735392; 21.04.1986 US 852740
(43) Date of publication of application: 03.12.1986
(73) Proprietor: NEORX CORPORATION, Seattle Washington 98119 (US)
(72) Inventor: Wilbur, Daniel Scott, Edmonds Washington 98020 (US); Fritzberg, Alan Richard, Edmonds Washington 98020 (US); Jones, David Schuster, Seattle Washington 98117 (US)
(74) Representative: Sheard, Andrew Gregory

(56) References cited:
- EP-A- 0 011 858
- DE-A- 2 947 500
- US-A- 3 979 506
- INTERNATIONAL JOURNAL OF APPLIED RADIATION & ISOTOPES, vol. 30, no. 9, September 1979, pages 576-577; Pergamon Press Ltd., GB, A.T.M. VAUGHAN: "The labelling of proteins with 211 at using an acylation raction"
- JOURNAL OF THE CHEMICAL SOCIETY, Chemical Communications, no. 21, 1982, pages 1276-1277, R.S. COLEMAN et al.: "Aromatic radiobromination without added carrier"
- CHEMICAL ABSTRACTS, vol. 53, no. 2, 25th January 1959, column 1527i-1528b, Columbus, Ohio, US, M. BLAU et al.: "Rho-Iodobenzoyl vivo protein-distribution studies: specific localization of antitissue antibodies"

## Description

This invention relates to radiohalogenated small molecules for labeling proteins, particularly antibodies, useful for clinical diagnosis and therapy, and to methods of introducing high specific activity radiohalogens into protein molecules.

A.T.M. Vaughan, International Journal of Applied Radiation and Isotopes **30(9):** 576-577 (September 1979) relates to the preparation of para-astatobenzoic acid from the corresponding para-amino benzoic acid. The compound is then conjugated to a protein by acylating the protein-amino groups.

EP-A-0011858 (Hoffmann La Roche) relates to compounds of formula A for imaging the brain. These compounds have an amine or alkyl amine group (which may be substituted) on a benzene ring.

R.S. Colman *et al*, Journal of the Chemical Society, Chemical Communication **21:** 1276-1277 (1982) relates to the preparation of para-bromo-N,N-dimethylaniline, bromobenzene and para-bromobenzoic acid for use in positron emission tomography.

Chemical Abstract **53(2):** 1521i - 1528b (25th January 1959) relates to coupling of antibodies to para-iodophenylacylchloride.

DE-A-2947500 and US-A-4473544 both relate to I¹²³-labelled omega-phenyl fatty acids of formula I which have a benzene ring which is substituted with the substituent -X-COOY, where X represents a 6-20 alkylene group and Y represents a hydrogen atom, an alkali metal ion, alkaline earth metal ion or ammonium ion.

Radiohalogenated proteins have been the object of extensive scientific study and promise to be useful for a variety of clinical applications, both in vitro and in vivo. For example, radioiodinated ferritin is used in an in vitro diagnostic determination of ferritin concentration in serum. Radioiodinated thyroid stimulating hormone is employed in a similar assay.

Radionuclides of halogens possess properties that make them very attractive for both diagnostic imaging and radiotherapy. For example, radioiodine as iodine-123 (T1/2 = 13 h, 159 keV gamma, electron capture) is nearly ideal for imaging with the current gamma cameras, and iodine-131 (T1/2 = 8 d, 364 keV gamma, beta particle), while producing images of lower quality, has been demonstrated to be useful in clinical radiotherapy of the thyroid. Similarly, bromine radionuclides such as bromine-75 (T1/2 = 1.6 h, positron) and bromine-76 (T1/2 = 16 h, positron) have properties that make them attractive for positron tomographic imaging, and bromine-77 (T1/2 = 2.4 d, several gammas, electron capture) has properties that make it attractive for radiotherapy. Other radiohalogens, such as fluorine-18 (T1/2 = 110 min, positron) and astatine-211 (T1/2 = 7.2 h, alpha particle), are also attractive candidates for radioimaging and radiotherapy.

The development of monoclonal antibodies which localize in cancerous tissue due to their high specificity and affinity for antigens on tumor cell surfaces has increased the prospect of clinical applications of radiolabeled antibodies for diagnosis and/or therapy. The high specificity of the antibodies make them desirable candidates as carrier molecules to attach specific radionuclides for delivering radioactivity to a cancer site.

Unfortunately, there are presently no routine clinical diagnostic or therapeutic applications of radiohalogen labeled antibodies for use in vivo. Direct radiohalogen labeling of antibodies and other proteins has proved to be difficult. Antibodies exhibit varying sensitivities to radiolabeling reaction conditions, and the oxidizing reaction conditions necessary for radiohalogenations are particularly deleterious. Direct radioiodination of proteins has become routine, but very often a measurable reduction of biological activity of the protein results. The stability of the attached radiolabel can also vary. For example, the loss of radioiodine from antibodies has been found to be as high as 50% in 24 hours for some labeled antibodies. Radiobrominations require even stronger oxidizing reaction conditions than radioiodinations, and attempts to radiobrominate proteins directly have met with little success unless expensive and difficult to obtain enzymes are used as oxidants. Furthermore, direct radiohalogenation of proteins occurs primarily at tyrosyl residues, and the activated phenol ring of tyrosine contributes to an inherent electronic instability of the resultant ortho-substituted radiohalogen label. The radiohalogen label is also subject to steric hindrance effects and may in addition be available to deiodinase enzymes which catabolize the structurally similar thyroid hormones, e.g., thyroxine.

One approach that circumvents subjecting proteins to the harsh reaction conditions necessary for direct radiohalogenations is the use of small molecules that can be radiolabeled in a separate reaction vessel and subsequently coupled to proteins under mild reaction conditions. This approach is the basis of the commercially available Bolton-Hunter reagent, N-succinimidyl-3-(4-hydroxyphenyl)propionate. Moderate radiolabeling yields are thereby obtained with radioiodine (35-60% yields of labeled proteins), but the stability of the radioiodine label suffers from the same problems as described for the chemically similar radioiodinated tyrosyl residues. Similarly, the commercially available Wood's reagent, methyl-4-hydroxybenzimidate, can be radioiodinated prior to attachment to proteins. However, the radioiodinated product is also plagued with the inherent instability of the ortho-iodinated phenol. Even though these reagents do not yield as stable a radiolabel as desirable, they have been extensively used for radioiodination because little deactivation of the protein results from their use.

The phenolic ring is employed in both the Bolton-Hunter and Wood's reagents because an activated aromatic ring is required in order to introduce high specific activity radioiodine into these molecules. It would be very desirable to be able to introduce radiohalogens into small molecules containing an aromatic ring other than a phenol so that the radiolabel would be more stably attached; furthermore, if the hydroxyl were not present the radiolabel would be less subject to electronic and steric hindrance effects.

Recent reports in the literature describe the use of organometallic intermediates to introduce high specific activity radiohalogens into non-activated aromatic rings of simple organic molecules, but not into more complex organic molecules that can be attached to proteins without the aforementioned disadvantages.

### Summary of the Invention

This invention provides a rapid and efficient method of introducing high specific activity halogen radionuclides into non-activated aromatic rings of small molecules that can be conjugated to proteins under conditions that preserve the biological activity of the protein. Substitution of the radiohalogen onto a non-activated aromatic ring provides a radiolabeled protein with greater stability than prior art substitutions onto activated aromatic rings such as phenols. Furthermore, the radiohalogen can be substituted in positions such as para or meta on an aromatic ring which does not contain a hydroxy functionality in order to render the radiolabel less susceptible to attack by deiodinase enzymes.

Pursuant to this method, haloaryl compounds are metalated with one of the following organometallic groups: Sn(n-Bu)₃ or SnMe₃. The resulting aryltin compound can be transmetalated in a site-specific reaction with one of the following organometallic groups: HgX₂, Hg(OAc)₂, BX₃, or BZ₃, wherein X is Cl, Br, or I, and Z is alkyl or alkoxy. The metalated compounds are subsequently radiohalogenated via a demetalation reaction. A functional group suitable for conjugation to protein can be added subsequently or preferably prior to the radiohalogenation.

Also provided are compounds of the formula: R₁-Ar-R₂, wherein R₁ is either a radiohalogen or any one of the organometallic groups stated above, Ar is aromatic or heteroaromatic ring, and R₂ is a short-chain substituent that does not highly activate the aromatic ring and that bears a functional group suitable for conjugation to protein under conditions that preserve the biological activity of the protein. The radiohalogenated small molecules of this invention can be conjugated to proteins such as monoclonal antibodies for use in diagnosis and therapy.

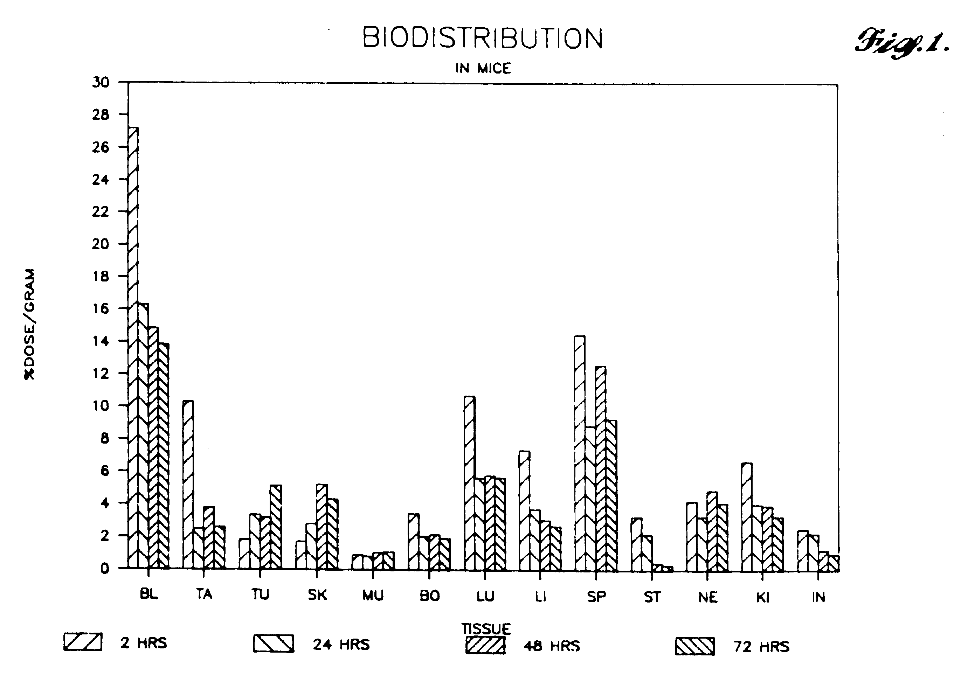

FIGURES 1, 2, 3, and 4 are bar graphs presenting comparative biodistribution data that confirms, as described in Example 14, the enhanced in vivo stability of monoclonol antibodies radiolabeled pursuant to this disclosure.

The present invention is directed to radiohalogenated small molecules of the formula I:

*X-Ar-R I

wherein *X is a radiohalogen, Ar is aromatic or heteroaromatic ring, and R is a short-chain substituent comprising a phenolic ester, imide ester, imidate ester, anhydride, acylsuccinimide, aldehyde, isothiocyanate, thiol, diazo, hydrazine, alkyl halide, maleimide, alkyl imide ester, amido alkyl imide ester, alkyl imidate ester, or amido alkyl imidate ester that does not highly activate ring Ar onto which radiohalogen *X is substituted and that bears a functional group suitable for conjugation to protein under mild, e.g., acylation, conditions that preserve the biological activity of the protein. The compounds of formula I can be coupled to proteins, such as monoclonal antibodies or plasma proteins (or to carriers such as amino acid polymers which can in turn be coupled to proteins), to provide reagents for diagnostic and therapeutic applications.

As utilized herein, the symbol *X indicates any radioisotope of: iodine, particularly I-123, I-125, and I-131; bromine, particularly Br-75, Br-76, and Br-77; fluorine, particularly F-18; and, astatine, particularly At-211. Preferred radiohalogens *X for diagnostic imaging purposes include I-131 and most preferably I-123 for imaging with gamma cameras; and for positron tomographic imaging: F-18, Br-75, and Br-76. For clinical radiotherapy, preferred radiohalogens *X include I-131, Br-77, and At-211. Preferred radiohalogens *X for in vitro radioimmunoassay purposes include I-125 and I-131. Pursuant to this invention the radiohalogen *X is preferably para- or meta-positioned on ring Ar relative to substituent R in order to render the radiohalogen less succeptible to catabolism by dehalogenase enzymes.

The symbol Ar indicates any aromatic or heteroaromatic ring. Preferred rings Ar include benzene, pyridine, furan, and thiophene, the latter three because of the enhanced water solubility they convey. The attachment of the radiohalogen to a carbon atom in ring Ar is preferred over attachment to an alkyl carbon atom due to the increased bond strength of the carbon-halogen bond in the aromatic or heteroaromatic ring. The nature of the ring Ar is not critical and may be mono-, bi-, tri-, or higher number of rings, but a monocyclic ring is preferred because of increased water solubility. Ring Ar may consist of all carbon atoms or may contain heteroatoms such as nitrogen, oxygen, or sulfur. Inclusion of heteroaromatic rings such as pyridines, furans, or thiophenes can assist in increasing the water solubility of the radioiodinated small molecule conjugates. Further substitution on the ring Ar, exclusive of *X and R, with polar substituents such as a nitro, sulfonic acid, carboxylic acid, or dialkyl amino group can also be used to enhance water solubility. Increased water solubility is desirable to give higher yields (and less potential aggregation) in the conjugation reaction with protein, and to cause less perturbation of the lipophilicity of the antibody conjugate. Other substituents can be added to impart some control against enzymatic degradation.

The symbol R indicates any substituent that meets the following three requirements: First, the R substituent must not highly activate ring Ar toward electrophilic substitution. In other words, R cannot be linked to ring Ar by a linkage that increases the electron density of Ar on the order of the increase produced by a free hydroxy or primary amino substitution. Second, R should be a short-chain substituent so that unconjugated or cleaved radiohalogenated molecules can be rapidly removed by the kidneys. Thus, R may contain an alkyl or other spacer chain between the aryl linkage and the functional group for protein conjugation, but such a spacer chain should preferably contain no more than 5, and most preferably no more than 3, straight-chain carbon atoms. Third, the R substituent should bear a functional group that is available for conjugation to protein under mild conjugation conditions, such as acylation or amidination, that preserve the biological activity of the protein. Thus, R should provide a functional group (termed Q herein), such as imide ester or imidate ester, for covalent attachment to corresponding functional groups (or conjugated attachment sites) on amino acid or carbohydrate residues of proteins, glycoproteins, or carrier molecules such as amino acid polymers that can in turn be conjugated to protein molecules.

Suitable functional groups Q for the above-stated purpose include phenolic esters (e.g., para-nitrophenol), imide esters (e.g., succinimide ester), imidate esters, anhydrides, acylsuccinimides, aldehydes, isothiocyanates, thiol, diazo, amines, hydrazines, alkyl halides, Michael acceptor α,β-unsaturated carbonyl compounds such as maleimides, and other groups that can be used to attach the molecule to a protein through a covalent bond. Also provided are radiohalogenated small molecules of formula I wherein the R substituent bears a precursor of functional group Q. Suitable precursors include: carboxylic acid where Q is phenolic ester, imide ester, anhydride, acylsuccinimide, or maleimide; nitrile where Q is imidate ester; alcohol where Q is aldehyde; halide where Q is isothiocyanate, thiol, hydrazine, or amine; and amine where Q is diazo or maleimide.

Representative radiohalogenated small molecules of this invention include the compounds of formulas II and III: 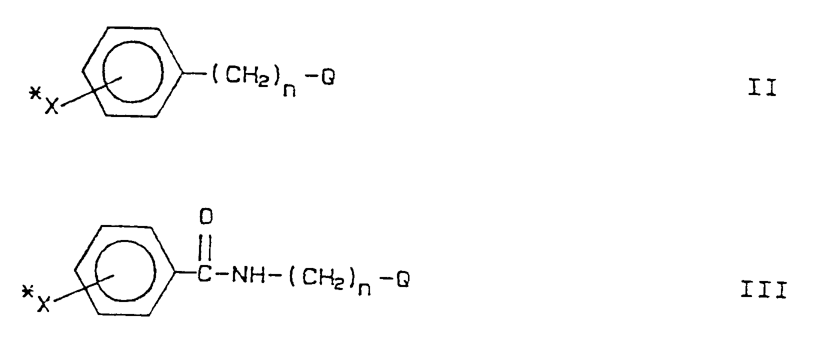
wherein *X is radiohalogen as stated above, n is an integer, and Q is a functional group as stated above. The radiohalogen may be positioned as any regioisomer on the aromatic ring Ar, but para- or meta-substitution is preferred in order to make the radiohalogen less susceptible to steric instability and catabolism by deiodinase enzymes. The spacer component (CH₂)ₙ can be a straight- or branched-chain alkyl or heteroalkyl group containing up to 12 but preferably no more than 5 straight-chain carbon atoms. In the most preferred embodiments no more than three straight-chain carbon atoms separate functional group Q from the aromatic ring; i.e., n = 0, 1, 2, or 3. In order to quickly clear background activity for diagnostic imaging, and to minimize radiation dose to vital organs, the alkyl spacer component should be shortened so that nonconjugated and chemically or enzymatically cleaved radiohalogenated compounds can be rapidly cleared through the kidneys, rather than via fatty acid degradation pathways in the heart or liver. On the other hand, for certain applications a short alkyl or heteroalkyl spacer between the radiolabeled aryl ring and the protein may be desirable.

Illustrative but nonlimiting examples of radiohalogenated small molecules of this invention include: N-succinimidyl 3-(4'-[¹³¹I]iodophenyl)propionate; methyl 3-(4'-[¹³¹I]iodophenyl)propioimidate; N-succinimidyl 4-[¹³¹I]iodobenzoate; methyl 4-[¹³¹I]iodobenzimidate; N-succinimidyl 4-[¹³¹I]iodobenzamidoacetate or N-succinimidyl 4-[¹³¹I]iodohippurate; methyl 4-[¹³¹I]iodobenzamidoacetimidate; and 4-[¹³¹I]iodobenzamidoacetonitrile.

Also provided by the present invention are organometallic intermediate molecules of formula IV:

M - Ar - R IV

wherein M is Sn(n-Bu)₃, (Bu being butyl), SnMe₃, (Me being methyl), HgX, (X being Cl, Br, or I), HgOAc, (OAc being acetate), B(OH)₂, or BZ₂, (Z being alkyl or alkoxy containing no more than five, and preferably fewer, carbon atoms), with both Ar and R as defined with reference to Formula I. Organometallic group M is preferably para- or meta-positioned. Illustrative but nonlimiting examples of organometallic intermediate molecules of this invention include: N-succinimidyl 3-(4'-tributylstannylphenyl)propionate; methyl 3-(4'-tributylstannylphenyl)propioimidate; N-succinimidyl 4-tributylstannylbenzoate; methyl 4-tributylstannylbenzimidate; N-succinmidyl 4-tributylstannylbenzamidoacetate or N-succinimidyl 4-tributylstannylhippurate; methyl 4-tributylstannylbenzamidoacetimidate; and 4-tributylstannylbenzamidoacetonitrile.

A method is provided for synthesizing the compounds of formula I. Briefly stated, one of three reactions described below may be used to metalate any positional isomer of a haloaromatic derivative bearing a functional group Q or a precursor to a functional group Q. The metalation will employ a trialkyltin reagent such as Sn(n-Bu)₃ or SnMe₃. The resulting aryltin compound can be transmetalated in site-specific reaction with one of the following organomercury or organoboron reagents: HgX₂, Hg(OAc)₂, BX₃, or BZ₃, wherein X is Br, I, or preferably Cl, and Z is alkyl or alkoxy. The resulting organometallic intermediates can alternatively be made via metalation reactions as referenced below. The stannylated or otherwise metalated compound is radiohalogenated via a demetalation reaction, preferably after functional group Q is present.

The stated organometallic reagents are available through known chemistry and are commercially available, e.g., from Alpha Products, Danvers, MA.

Precursors of the organometallic intermediate molecules of formula IV are available through known chemistry or are commercially available. Suitable precursor molecules include: para-bromo and para-iodobenzoic acids (Pfaltz and Bauer, Stamford, Conn.); para-bromo and para-iodobenzonitriles (Pfaltz and Bauer). Synthesis of para-bromophenylpropionic acid in high yield is described below in Example 1. Conversion of the acid to the corresponding nitrile can be accomplished as described in J.Org.Chem. 41(7):1187-1191, 1976.

Syntheses of the arylstannanes can be carried out via any one of the following three distinctly different reactions. In the first reaction, the haloaromatic compound is reacted with n-butyl lithium at near -100°C or with magnesium at room temperature, followed by reaction of the aryl metal with a halide derivative of a trialkyltin reagent, preferably tri-n-butyltin. In the second reaction, the haloaromatic compound is reacted with hexaalkylditin and tetrakis(triphenylphosphine)palladium. In the third reaction, the haloaromatic compound is reacted with a trialkylstannyl alkali (e.g., trimethylstannyl sodium) in tetraglyme at 0°C.

Syntheses of organomercurial and organoboron intermediates can be carried out by previously described methods (Orgonometallic Chem.Rev. 1:305-329, 1966; Tetrahedron 38(12):1713-1754, 1982) or preferably by transmetalation of the above arylstannanes. Transmetalation of an aryltin compound with one of the stated organomercury or organoboron groups can be made to achieve a site-specific substitution onto the aromatic ring. For example, transmetalation with BCl₃ yields the corresponding aryl-BCl₂ compound, which can then be base converted to the corresponding aryl-B(OH)₂ compound. Reaction with Hg(OAc)₂ yields the corresponding aryl-HgOAc compound which can be further converted to aryl-HgX by reaction with halide ion (X).

Attaching the yet-to-be radiolabeled compounds to proteins will require the availability of a functional group Q, such as can be provided by conversion of a carboxylate precursor group into an ester containing a good leaving group, for example hydroxysuccinimide, or by conversion of a cyano precursor into an imidate ester. Such conversions can be considered as activating the molecule towards reaction with a corresponding functional group, such as an amino group (e.g., lysine residues), a thiol or hydroxy, (or, less preferably, a carboxylate), on a protein. Due to the nucleophilic nature of the alkali metal intermediates, when these reagents are used the activated imide and imidate esters or other nucleophilic reagent sensitive above-stated functional groups Q can only be synthesized after introducing the trialkyltin functionality onto the aromatic ring. Therefore, we have found that the second arylstannane synthesis reaction is particularly useful for preparing compounds that are sensitive to nucleophilic reactions. Making the activated imide and imidate esters or other functional group Q prior to introducing the radiohalogen avoids losses in radiochemical yields and the incorporation of radiochemical impurities that would otherwise result.

Conversion of the aryltin or otherwise metalated derivatives from free carboxylic acids or their stannyl esters to N-succinimidyl esters can be accomplished prior to the radiohalogenation step, using dicyclohexylcarbodiimide (DCC) and N-hydroxysuccinimide (NHS) in anhydrous tetrahydrofuran (THF). However, synthesis of imidate esters from cyano compounds is made problematical by the acid instability of the aryl-metal bond, particularly the aryltin bond. Thus, cyano containing compounds may be radiohalogenated prior to formation of the imidate ester. The preferred method is to form the imidate ester of the corresponding halobenzonitrile or haloarylalkyl nitrile, and subsequently metalate the imidate containing compound using hexaalkylditin and tetrakis(triphenylphosphine)palladium (using the second arylstannane synthesis route).

Radiohalogenation of the corresponding N-succinimidyl esters will yield the desired compounds via a site-specific demetalation reaction. Due to the possibility of hydrolysis of the N-succinimidyl esters, the reactions should be carried out using conditions that will minimize the reaction time. For example, the reactants can be brought to room temperature in order to minimize the hydrolysis by shortening the reaction time. Alternatively, reaction mixtures in which the hydrolysis is relatively slow can be used. Surprisingly, addition of acetic acid to the reaction mixture significantly slows the N-succinimidyl ester hydrolysis. For example, the N-succinimidyl ester of 4-tri-n-butylstannylbenzoate has been found to be stable for months in 5% acetic acid/methanol solution, advantageously eliminating the short time constraints routinely encountered with, e.g., the Bolton-Hunter method.

The radiohalogenation reaction mixture should have a dilute sodium thiosulfate solution added to it prior to any purification or workup procedure. Separation of any remaining radiohalide can then be easily accomplished prior to or during purification of the radiolabeled protein via chromatographic separations.

The radiohalogenation reactions are preferably carried out in protic solvents such as water, methanol, ethanol, or mixtures thereof. The alcoholic solvents can be conveniently removed prior to addition of the radioactive compound to the protein solution (or vice versa). Alternatively, nonprotic solvents (e.g., carbon tetrachloride) can be used for radiohalogenation since a biphasic system may provide a convenient method of separating free radiohalide from the labeled compounds.

The radiohalogenations can be monitored and purified by radio-HPLC, for example on a reverse-phase high performance liquid chromatography column (C-18) eluted with a mixture of MeOH/1% HOAc in H₂O.

Also provided are radiopharmaceutical kits for clinical use which include a vial containing a compound (IV) that has an appropriate functional group Q along with the appropriate reagents such that introduction of a radiohalogen will give the desired radiohalogenated molecule. The radiohalogenated product can then be conjugated to protein, such as a monoclonal antibody supplied in a separate vial. The kit may also include one or more small columns for chromatographic separation of remaining precursors and impurities from the radiohalogenated protein product.

This invention is further illustrated by the following Examples.

### EXAMPLE 1

### Synthesis of 3-(4'-bromophenyl)propionic acid.

A flask containing 10.0 g 2,4,4-trimethyl-2-oxazoline (88 mmol) dissolved in anhydrous tetrahydrofuran (THF) under nitrogen was allowed to equilibrate at -78°C (dry ice/acetone bath) for 10 minutes. To this flask was slowly added 55 mL of n-butyl lithium (1.6 N, 85 mmol). The light yellow solution was then transferred to a second flask containing 29.4 g (100 mmol) 4-bromobenzylbromide in 200 mL anhydrous THF under nitrogen at -78°C. Once the addition was complete, the reaction mixture was stirred for 20 minutes at -78°C; then the cooling bath was removed and the stirring was continued for 3 hours.

A 200 mL volume of saturated NH₄Cl was added (cautiously) and the two phases were separated. The THF layer was dried over anhydrous MgSO₄ and evaporated to yield an oil. This oil was dissolved in 200 mL dimethoxyethane and 100 mL 3N HCl, and was heated to reflux for 5 hours. The resultant solution was poured onto ice, and the light tan solid was collected (yield: 17 g).

This solid was dissolved in approximately 300 mL 15% KOH and extracted with 200 mL diethyl ether. The KOH solution was diluted with ice and acidified with concentrated HCl. The white precipitate was collected and washed well with H₂O (yield: 10 g).

### EXAMPLE 2

### Synthesis of 4-tri-n-butylstannylbenzonitrile.

A flask containing 1 equivalent (e.g., 10 mmol) of 4-bromobenzonitrile in freshly distilled anhydrous THF was allowed to equilibrate at approximately -100°C (diethyl ether/liquid nitrogen bath) for approximately 30 minutes under nitrogen. To the flask was then added 1.1 equivalents (e.g., 11 mmol) of a n-butyl lithium solution (2.3 M in hexanes) at such a rate as to keep the reaction temperature below -90°C. After the addition was completed, the reaction mixture was stirred at approximately -100°C for an additional five minutes.

Then a solution of 1.1 equivalents (e.g., 11 mmol) of tri-n-butyltin chloride in anhydrous THF was added dropwise. As before, the addition was made at such a rate as to keep the reaction temperature below -90°C. After the addition was completed, the reaction mixture was stirred at -100°C for 30 minutes. The cooling bath was then removed and the reaction mixture was allowed to come to room temperature over a two hour period.

The THF was then removed by rotary evaporation to yield a milky oil. This oil was dissolved in CH₂Cl₂, washed with H₂O, and dried over MgSO₄. Evaporation of the CH₂Cl₂ yielded (96%) a faint yellow oil. Purification of this oil by distillation at 132°C/100 microns gave a colorless oil which was 85% pure by HPLC analysis: ¹H N MR (CDCl₃)δ 0.68-2.0 (m, 27H), 7.68 (s, 4H).

### EXAMPLE 3

### Syntheses of tri-n-butylstannyl 4-(tri-n-butylstannyl)benzoate.

Method 1: To a solution of 2.01 g (10 mmol) of 4-bromobenzoic acid (Alfa Products) in 100 mL of anhydrous THF cooled to -100°C (diethyl ether/liquid nitrogen) (in a flask equipped with thermometer, addition funnel, and magnetic stirring bar) was added dropwise 13.5 mL (21 mmol) of 1.55N n-butyl lithium in hexane (Aldrich) at such a rate that the internal temperature did not exceed -90°C. The viscous mixture was allowed to warm to -78°C, and 5.70 mL (6.83 g, 21 mmol) of n-tributyltin chloride (Aldrich) was added over 15 minutes. When addition was completed, the mixture was allowed to come to room temperature and stirred for 1 hour. To the mixture was then added 150 mL of saturated (NH₄)₂SO₄ solution, and the mixture was extracted with 150 mL of diethyl ether. The upper layer was washed with brine, dried (MgSO₄), filtered, and concentrated to give 7.49 g of liquid. Purification by silica gel chromatography (25% EtOAc/hexane) gave 2.32 g (33%) of tri-n-butylstannyl 4-(tri-n-butylstannyl)benzoate as a viscous oil: ¹H N MR (CCl₄)δ 0.32-2.70 (m, 54H), 7.50 (d, J=7Hz, 2H), 7.99 (d, J=7Hz, 2H). IR (neat) 1635, 1450, 1315 cm⁻¹.

Method 2: To a stirred suspension of 1.00 g (5 mmol) of 4-bromobenzoic acid (Alpha) in 7.6 mL of hexabutylditin (Alfa) and 10 mL of toluene under N₂ atmosphere was added 58 mg of tetrakis(triphenylphosphine)palladium(O) (Aldrich), and the mixture was stirred at 95°C for 20 hours. When cool, the orange mixture was partitioned between 100 mL of 10% aqueous KF solution and 100 mL of diethyl ether. The ether layer was washed with brine, dried (MgSO₄), filtered, concentrated, and distilled by Kugelrohr to yield 1.14 g (33%) of tri-n-butylstannyl 4-(tri-n-butylstannyl)benzoate as a viscous oil: distilled at 200-250°C, 0.25 m mHg.

### EXAMPLE 4

### Synthesis of N-succinimidyl 4-(tri-n-butylstannyl)benzoate.

To a solution of 1.29 g (1.84 mmol) of tri-n-butylstannyl 4-(tri-n-butylstannyl)benzoate in 18.4 mL of anhydrous THF was added 417 mg (2.02 mmol) of dicyclohexylcarbodiimide (Sigma) and 212 mg (1.84 mmol) of N-hydroxysuccinimide (Sigma), and the mixture was stirred for 15 hours at room temperature. To the mixture was then added three drops of HOAc. The solids were removed by filtration, and the mixture was concentrated. Purification by silica gel chromatography (25% EtOAc/hexane) yielded 731 mg (78%) of N-succinimidyl 4-(tri-n-butylstannyl)benzoate: ¹H N MR (CDCl₃)δ 0.50-2.20 (m, 27H), 2.90 (s, 4H), 7.65 (d, J=8Hz, 2H), 8.06 (d, J=8Hz, 2H). IR (neat) 1780, 1750, 1190, 1055, 980 cm-1.

### EXAMPLE 5

### Synthesis of 4-(tri-n-butylstannyl)hippuric acid.

To a solution of 406 mg (0.80 mmol) of N-succinimidyl 4-(tri-butylstannyl)benzoate in 6.4 mL of CH₃CN was added 224µL (160 mg, 1.60 mmol) of Et₃N (Fisher) followed by a solution of 60 mg (0.80 mmol) of glycine (Fisher) in 1.6 mL of H₂O. The mixture was stirred for 1 hour at room temperature and then partitioned between 10 mL of 5% aqueous HCl solution and 10 mL of Et₂O. The Et₂O layer was washed with brine, dried (MgSO₄), filtered, and concentrated to give 374 mg (100%) of 4-(tri-n-butylstannyl)hippuric acid, a viscous oil pure enough for further reaction: ¹H N MR (CDCl₃)δ 0.40-2.50 (m, 27H), 3.94-4.53 (m, 2H), 6.70-7.25 (m, 1H), 7.53 (d, J=8Hz, 2H), 7.80 (d, J=8Hz, 2H), 9.00-9.65 (brd s, 1H). IR (neat) 3600-2300 broad with more intense absorbance at 3330, 1720, 1635, 1535 cm⁻¹.

### EXAMPLE 6

### Synthesis of N-succinimidyl 4-(tri-n-butylstannyl)hippurate.

To a solution of 378 mg (0.80 mmol) of 4-(tri-n-butylstannyl)hippuric acid in 8 mL of THF was added 182 mg of dicyclohexylcarbodiimide (Sigma) followed by 92 mg of N-hydroxysuccinimide (Sigma). The mixture was stirred at room temperature for 6 hours, and 3 drops of acetic acid were then added. The mixture was filtered, and the filtrate was concentrated to an oily solid. Purification by chromatography on silica gel (50% EtOAc/hexane) gave pure N-succinimidyl 4-(tri-n-butylstannyl)hippurate 158 mg (35%) as a white solid: mp 109-111°C (EtOAc/hexane); ¹H N MR (CDCl₃)δ 0.33-2.27 (m, 27H), 2.85 (s, 4H), 4.66 (d, J=6Hz, 2H), 7.02 (t, J=6Hz, 1H), 7.63 (d, J=8Hz, 2H), 7.89 (d, J=8Hz, 2H).

### EXAMPLE 7

### Synthesis of tri-n-butylstannyl 3-(4'-tri-n-butylstannylphenyl)propionate

A solution of 2.29 g (10 mmol) of 3-(4'-bromophenyl)propionic acid in 125 mL of THF and 25 mL of hexane (in a flask fitted with N₂ inlet, addition funnel, and thermometer, under N₂ atmosphere) was cooled to -100°C (diethyl ether/liquid nitrogen). To the solution was added dropwise 13.5 mL (21 mmol) of a 1.55 M solution of butyl lithium in hexane (Aldrich) at such a rate that the temperature of the solution did not exceed -90°C. The resulting viscous mass was allowed to warm to -75°C over 1/2 hour, and 5.70 mL of n-tributyltin chloride (Aldrich) was added dropwise over 1 minute. The mixture then again became fluid and was stirred at -75°C for 30 minutes. The cooling bath was then removed, and the mixture was stirred until it reached room temperature. To the mixture was added 100 mL of saturated (NH₄)₂SO₄ solution. After shaking in a separatory funnel, the upper layer was washed successively with 100 mL of 10% KF solution and with 50 mL of brine, dried with MgSO₄, filtered, and concentrated to give 7.5 g of waxy solid. Two recrystallizations of 1.00 g of this material from H₂O/acetone yielded 405 mg (42%) of tri-n-butylstannyl 3-(4'-tri-n-butylstannylphenyl)propionate as a white powder: mp 59-60°C; ¹H N MR (CDCl₃)δ 0.50-2.34 (m, 54H), 2.75 (m, 4H), 7.23 (d, J=8Hz, 2H), 7.45 (d, J=8Hz, 2H); IR (melt) 1695, 1530 cm⁻¹.

### EXAMPLE 8

### Synthesis of N-succinimidyl 3-(4'-tri-n-butylstannylphenyl)propionate.

To a solution of 460 mg (0.63 mmol) of tri-n-butylstannyl 3-(4'-tri-n-butylstannylphenyl)propionate in 6.5 mL of anhydrous THF was added 143 mg (0.69 mmol) of dicyclohexylcarbodiimide (Sigma) followed by 73 mg (0.63 mmol) of N-hydroxysuccinimide (Sigma). The mixture was stirred for 24 hours, and 37µL (38 mg, 0.63 mmol) of acetic acid was added. The mixture was filtered and concentrated. Purification by silica gel chromatography (30% EtOAc/hexane) yielded on the order of 195 mg (58%) of N-succinimidyl 3-(4'-tri-n-butylstannylphenyl)propionate as a viscous oil: ¹H N MR (CDCl₃) δ 0.38-2.15 (m, 27H), 2.53-3.32 (m, 8H), 7.20 (d, J=8Hz, 2H), 7.38 (d, J=8Hz, 2H); IR (neat) 1820, 1790, 1740, 1185, 1045 cm⁻¹.

### EXAMPLE 9

### Synthesis of methyl 4-bromobenzimidate.

HCl gas was bubbled through a suspension of 7.2 g (40 mmol) of 4-bromobenzonitrile (Pfaltz and Bauer) in 20 mL of methanol until all the solid went into solution. The mixture was placed in a refrigerator at 4°C for 90 hours, by which time long needles of the hydrochloride salt of methyl 4-bromobenzimidate had formed. The salt was collected by vacuum filtration to give 8.17 g (81%) of long white needles, and converted to the base by partitioning 1.33 g of the HCl salt between 50 mL of ice cold 10% Na₂CO₃solution and 50 mL of diethyl ether. The diethyl ether layer was washed with 50 mL of brine, dried with MgSO₄, filtered, concentrated, and recrystallized from hexane to give 0.83 g (60% overall yield) of pure methyl 4-bromobenzimidate as needles: mp 64-65°; ¹H N MR (CDCl₃)δ 3.91(s, 3H), 7.60(s, 4H), 7.53-7.90 (brd, 1H).

### EXAMPLE 10

### Synthesis of methyl 4-(tri-n-butylstannyl)benzimidate.

To a solution of 214 mg (1.0 mmol) of methyl 4-bromobenzimidate in 2 mL of toluene under N₂ atmosphere was added 1.52 mL (1.74 g, 3.0 mmol) of hexabutylditin (Alfa) followed by 11 mg (0.01 mmol) of tetrakis(triphenylphosphine)palladium (0) (Aldrich). The mixture was heated at 75-80°C in an oil bath for 18 hours. When cool the mixture was partitioned between 10 mL of 10% aqueous KF solution and 10 mL of diethyl ether. The diethyl ether layer was dried with MgSO₄, filtered, and concentrated. Purification of the oily concentrate by silica gel chromatography (25% EtOAc/hexane) yielded 226 mg (53%) of pure methyl 4-(tri-n-butylstannyl)benzimidate as a viscous oil: ¹H N MR (CCl₄)δ 0.54-2.18 (m, 27H), 3.87 (s, 3H), 7.45 (d, J=8Hz, 2H), 7.67 (d, J=8Hz, 2H); IR (neat) 3340, 1635 cm⁻¹.

### EXAMPLE 11

### Synthesis of 4-(3'-propionic acid)phenylmercuric bromide.

To a solution of 96 mg (0.30 mmol) of mercuric acetate (Aldrich) in 15 mL of anhydrous THF at 20°C (water bath) was added 1.72 mL of acetic acid followed by a solution of 218 mg of tri-n-butylstannyl 3-(4'-tri-n-butylstannylphenyl)propionate in 1 mL of THF. The resulting solution was stirred at 20°C for 1 hour and 15 mL of aqueous 3% KBr solution was added. After another 1 hour, most of the THF was removed on the rotory evaporator until a white precipitate appeared and the mixture was diluted with 15 mL of H₂O. The precipitate was collected by vacuum filtration and washed with a small amount of EtOH to give 93 mg (72%) of 4-(3'-propionic acid)phenylmercuric bromide as a white solid: ¹H NMR (DMSO-d₆)δ 2.23-3.09 (m, 4H), 7.15 (d, J=8Hz, 2M), 7.39 (d, J=8Hz, 2H); mass spectrum (CI) m/z 431,433 (M + 18.7, 6.0), 351 (27), 133 (100).

Transmetalations involving organoboron groups are accomplished in like manner.

### EXAMPLE 12

### Radioiodination of N-succinimidyl 4-(tributylstannyl)benzoate.

To a vial containing 10-50 µg N-succinimidyl 4-(tri-n-butylstannyl)benzoate (0.02-0.10 µmol) in 50 µL of 5% HOAc/methanol was added 10-20 µg (0.08-0.15 µmol) N-chlorosuccinimide in 10-20 µL methanol. To this solution was added 10 µL Na¹²⁵I solution (diluted in Delbecco's phosphate buffered saline; Gibco Labs) (100 µCi-2 mCi). After 3-5 minutes, 20 µL of a 0.25 µg/mL solution of Na₂S₂O₅ was added. The reaction mixture was further diluted with 50 µL PBS solution, and a stream of N₂ was blown over the top of the solution until the volume was reduced to only aqueous (about 80 µL). Radiolabeling yields of 75-95% were obtained. This material can be used directly for protein labeling experiments, as described below.

Radioiodination with iodine-131 was carried out in like manner with comparable yields.

### EXAMPLE 13

### Protein labeling with radiohalogenated small molecules.

The above crude aqueous radioiodinated ester mixture was transferred to a vial containing buffered protein solution (pH 8.5-9), or vice versa. The conjugation reaction was complete within 5 minutes at room temperature. Conjugation yields ranged from about 35-60%. The labeled protein was purified from nonconjugated radioactivity using either a gel permeation chromatography column or a small pore filtration system (e.g., Centricon ultra centrifugation).

The radiohalogenated protein products of Example 13 can be used for radiodiagnosis and therapy. For example, monoclonal antibodies or antigen binding fragments that are specifically reactive with tumor cell associated antigens can be radiohalogenated by this method and then used for imaging tumor cell location in the body of a mammal: an appropriate amount of the radiohalogenated antibody can be introduced, e.g., by intravenous injection, into the patient's body, and thereafter the body can be scanned with a scintillation detector such as a gamma camera. Such radiohalogenated antibodies can also be introduced into the body of a mammal for the purpose of tumor radiotherapy.

Other proteins and peptides that tend to concentrate in an organ or diseased tissue can likewise be radiohalogenated by this method and used to monitor departures from homeostasis and disease states. For example, radiohalogenated fibrinogen can be used to localize deep vein thrombosis by in vivo imaging. Disease-altered uptake of pituitary and other peptide hormones can be monitored in a similar manner.

As a further example, antibodies radiohalogenated pursuant to this disclosure can be employed in in vitro radioimmunoassays.

All of the aforementioned radiohalogenated proteins are stably radiolabeled because the radiohalogen is substituted onto a nonactivated aromatic or heteroaromatic ring of the conjugate. Moreover, by thereby substituting the radiohalogen in the para or meta-position without the presence of a hydroxyl functionality, the radiohalogen is made less susceptible to catabolism by the body's deiodinase enzymes.

### EXAMPLE 14

### Biodistribution studies.

The advantageous in vivo stability of the subject small molecule radioiodinated proteins as compared to proteins conventionally radioiodinated through a phenol-containing aromatic ring was demonstrated by the following animal experiments. In the experiments the thyroid uptake of radioiodine (as measured by neck radioactivity) was used as a measure of in vivo metabolism.

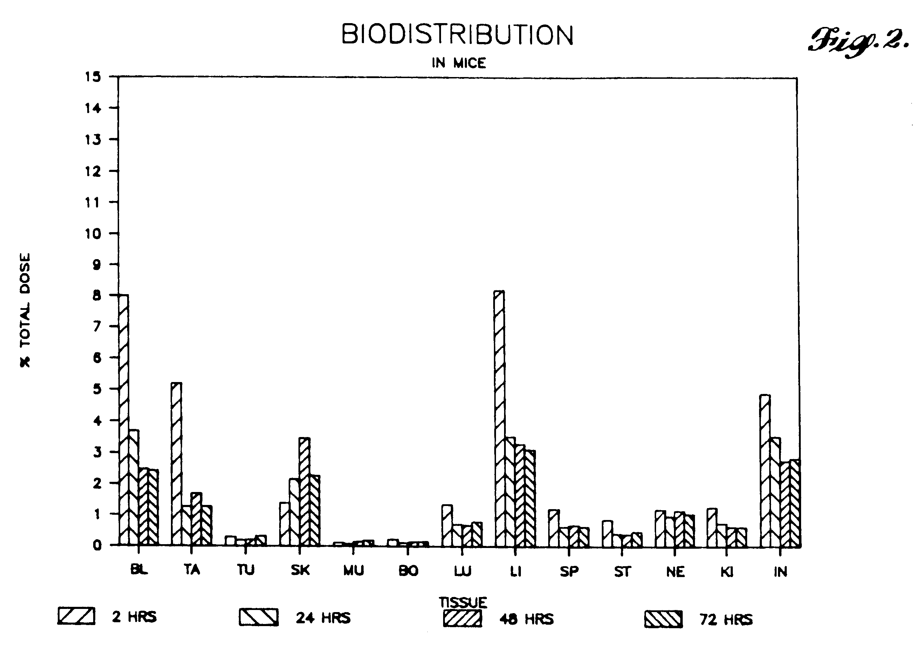

Twelve mice were injected with an antibody labeled with a radioiodinated product of Example 12. Groups of three were sacrificed at 2 hours, 24 hours, 48 hours, and 72 hours postinjection, and biodistributions of radiolabel were immediately determined by conventional techniques. The results are shown as bar graphs in FIGURES 1 and 2, in which the following symbols are used: BL, blood; TA, tail; TU, melanoma tumor; SK, skin; MU, skeletal muscle; BO, bone; LU, lung; LI, liver; SP, spleen; ST, stomach; NE, neck (including thyroid gland); KI, kidney; and IN, intestine. The results are alternatively presented as % dose/gram tissue or % total dose. (The graphs displaying % Total Dose only show a small portion of the total body activity for blood, skin, muscle, and bone.) Note that the amount of activity in the thyroid did not increase with time from the initial 2-hour baseline accumulation.

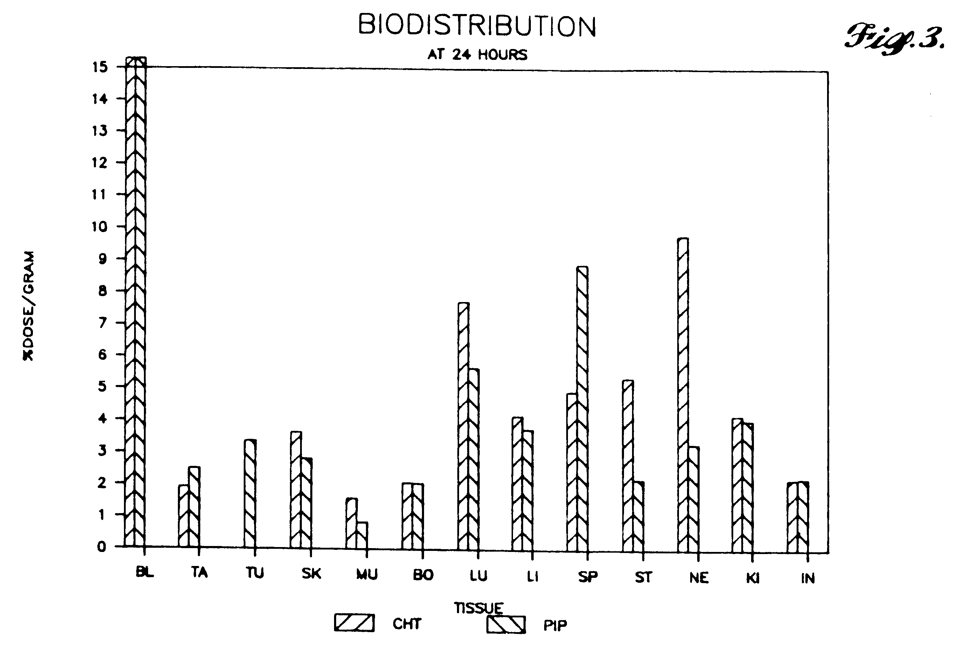

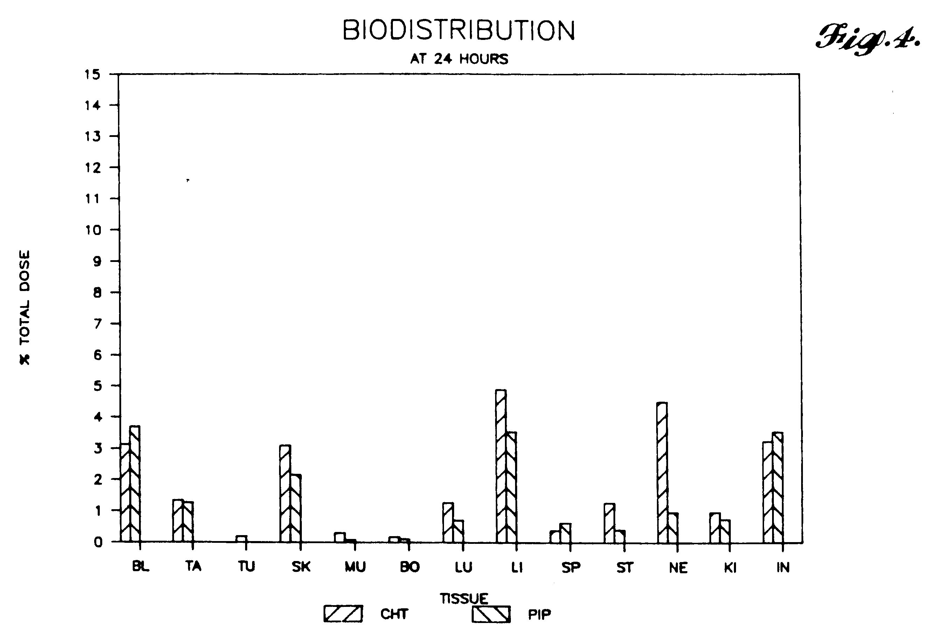

As a comparison of the stability at 24 hours, three additional mice were injected with identical amounts of the same antibody but directly labeled with radioiodine via a known chloramine-T oxidation. Biodistribution of radiolabel were determined as above, and the results are shown in FIGURES 3 and 4.

Referring to the FIGURES, at 24 hours the biodistributions of the subject and prior art reagents were very similar in the skin, bone, liver, kidney and intestine, indicating that the radiolabelled antibodies behaved similarly. In contrast, in animals injected with the chloramine-T labeled protein the stomach and neck had accumulated considerably greater fractions of the injection radioiodine, indicating that free radioiodide was most likely being produced by metabolism of the chloramine-T labeled protein. These comparative test results demonstrate that the subject para-iodophenyl-labeled antibody is much more stable in vivo, demonstrating for the first time that a nonactivated aromatic ring containing high specific activity radioiodine is not metabolically or otherwise deiodinated in vivo. The control data (FIGURES 3 and 4) is considered to be comparable to radiolabeled phenol-containing aromatic rings generally, whether labeled directly as via chloramine-T oxidation or indirectly, as with the Bolton-Hunter or Woods reagents.

Additional biodistribution studies with F(ab')₂ showed that antibody fragments radioiodinated by this method were stable to in vivo metabolization. Furthermore, this type of radiolabeled reagent was more rapidly cleared than the labelled whole antibody preparation discussed above, leaving minimal residue at 72 hours in the body organs.

## Claims

1. A compound having the general formula
*x - Ar - R
wherein
*X represents a radioisotope of iodine, bromine, fluorine, or astatine;
Ar is aromatic or heteroaromatic ring; and
R is a short-chain substituent comprising a phenolic ester, imide ester, imidate ester, anhydride, acylsuccinimide, aldehyde, isothiocyanate, thiol, diazo, hydrazine, alkyl halide, maleimide, alkyl imide ester, amido alkyl imide ester, alkyl imidate ester, or amido alkyl imidate ester that does not highly activate the ring onto which the radioisotope is substituted and has a functional group suitable for conjugation to protein under conditions that preserve the biological activity of the protein.

2. A compound according to claim 1 wherein *X is I-123, I-125, I-131, Br-75, Br-76, Br-77, F-18, or At-211.

3. A compound having the formula
M - Ar - R
wherein
M is Sn(n-Bu)₃, SnMe₃, HgX₂, (X being Cl, Br, or I), HgOAc, B(OH)₂, or BZ₃, (Z being alkyl or alkoxy);
Ar is aromatic or heteroaromatic ring; and
R is a short-chain substituent comprising a phenolic ester, imide ester, imidate ester, anhydride, acylsuccinimide, aldehyde, isothiocyanate, thiol, diazo, hydrazine, alkyl halide, maleimide, alkyl imide ester, amido alkyl imide ester, alkyl imidate ester, or amido alkyl imidate ester that does not highly activate the ring onto which M is substituted and has a functional group suitable for conjugation to protein under conditions that preserve the biological activity of the protein.

4. A compound according to any preceding claim wherein *X is para- or meta- positioned relative to substituent R.

5. A method of synthesising a radiologenated small molecule for protein labelling having the formula
*X - Ar - R
wherein *X is a radioisotope of iodine, bromine, fluorine, or astatine, Ar is aromatic or heteroaromatic ring, and R is a short-chain substituent comprising a phenolic ester, imide ester, imidate ester, anhydride, acylsuccinimide, aldehyde, isothiocyanate, thiol, diazo, hydrazine, alkyl halide, maleimide, alkyl imide ester, amido alkyl imide ester, alkyl imidate ester, or amido alkyl imidate ester that does not highly activate the ring onto which the radioisotope is substituted and has a functional group suitable for conjugation to protein under conditions that preserve the biological activity of the protein, which comprises the steps of:
substituting an organometallic group for a halogen on a haloaromatic compound bearing the functional group or a precursor of the functional group, the organometallic group being selected from Sn(n-Bu)₃ and SnMe₃;
removing the organometallic group by halodemetalisation and substituting there for a radioisotope of iodine, bromine, fluorine, or astatine;
any precursor of the functional group being converted to the functional group either before or after the halodemetalising step.

6. The method of claim 5 wherein the haloaromatic compound of substitution step is halogen para- or meta-substituted.

7. A method according to claim 5 or 6 wherein the substitution step comprises (i) reacting the haloaromatic compound with either n-butyl lithium at -100°C or with magnesium at room temperature, and (ii) reacting the reaction product of (i) with the organometallic group.

8. A method according to any of claims 5 to 7 wherein the substitution step comprises reacting the haloaromatic compound with hexaalkyltin and tetrakis(triphenylphosphine)palladium.

9. A method according to any of claims 5 to 7 wherein the substitution step comprises reacting the haloaromatic compound with a trialkylstannyl alkali in tetraglyme at 0°C.

10. A method according to any of claims 5 to 9 wherein the substitution step further comprises transmetalating the aryltin-substituted compound with an organometallic group selected from HgX₂, Hg(OAc)₂, BX₃, and BZ₃, wherein X is Cl, Br or I, and Z is alkyl or alkoxy.

11. A method of radiohalogenating a protein comprising the step of reacting, in an aqueous medium, amino, thiol, or hydroxy groups on said protein with a compound according to any of claims 1 to 4.

12. A method according to claim 11 wherein said protein is selected from the group consisting of antigen binding fragments, amino acid polymers, plasma proteins, peptide hormones, and antibodies, particularly monoclonal antibodies specifically reactive with tumour cell associated antigens.

13. A protein prepared by a method according to claims 11 or 12.

14. A method of synthesing a radiohalogenated small molecule for protein labelling having the formula
*X - Ar - R
wherein *X is a radioisotope of iodine, bromine, fluorine, or astatine, Ar is phenyl or heterocyclic aromatic ring, and R is a short-chain substituent comprising a phenolic ester, imide ester, imidate ester, anhydride, acylsuccinimide, aldehyde, isothiocyanate, thiol, diazo, hydrazine, alkyl halide, maleimide, alkyl imide ester, amido alkyl imide ester, alkyl imidate ester, or amido alkyl imidate ester that does not highly activate the ring onto which the radioisotope is substituted and has a functional group suitable for conjugation to protein under conditions that preserve the biological activity of the protein, which method comprises the steps of:
(a) forming the imidate ester of a corresponding halobenzonitrile or haloarylalkyl nitrile;
(b) substituting an organometallic group for the halogen on the product of step (a), the organometallic group being selected from Sn(n-Bu)₃ and SnMe₃, and the substitution comprising reacting the imidate-containing step (a) product with hexaalkyltin and tetrakis(triphenylphosphine)-palladium;
(c) halodemetalising the product of step (b) to remove the organometallic group and substitute therefor a radioisotope of iodine, bromine, fluorine, or astatine.

## Patentansprüche

1. Verbindung mit allgemeinen Formel
*X -Ar- R
wobei
*X ein Radioisotop von Jod, Brom, Fluor oder Astatin darstellt;
Ar ein aromatischer oder heteroaromatischer Ring ist; und
R ein kurzkettiger Substituent ist, umfassend Phenolester, Imidester, Imidatester, Anhydrid, Acylsuccinimid, Aldehyd, Isothiocyanat, Thiol, Diazo, Hydrazin, Alkylhalogenid, Maleimid, Alkylimidester, Amidoalkylimidester, Alkylimidatester oder Amidoalkylimidatester, der den Ring, auf dem das Radioisotop substituiert ist, nicht stark aktiviert und eine funktionelle Gruppe besitzt, die zur Konjugation an Protein unter Bedingungen, die die biologische Aktivität des Proteins bewahren, geeignet ist.

2. Verbindung nach Anspruch 1, wobei *X I-123, I-125, I-131, Br-75, Br-76, Br-77, F-18 oder At-211 ist.

3. Verbindung der Formel
M - Ar - R
wobei
M Sn(n-Bu)₃, SnMe₃, HgX₂ (X ist Cl, Br oder I), HgOAc, B(OH)₂ oder BZ₃ (Z ist Alkyl oder Alkoxy) ist;
Ar ein aromatischer oder heteroaromatischer Ring ist; und
R ein kurzkettiger Substituent ist, umfassend Phenolester, Imidester, Imidatester, Anhydrid, Acylsuccinimid, Aldehyd, Isothiocyanat, Thiol, Diazo, Hydrazin, Alkylhalogenid, Maleimid, Alkylimidester, Amidoalkylimidester, Alkylimidatester oder Amidoalkylimidatester, der den Ring, auf dem M substituiert ist, nicht stark aktiviert und eine funktionelle Gruppe besitzt, die zur Konjugation an Protein unter Bedingungen, die die biologische Aktivität des Proteins bewahren, geeignet ist.

4. Verbindung nach einem der vorangehenden Ansprüche, wobei sich *X in bezug auf den Substituenten R in para- oder meta-Stellung befindet.

5. Verfahren zur Synthetisierung eines radiohalogenierten kleinen Moleküls für das Markieren von Protein der Formel
*X - Ar - R
wobei *X ein Radioisotop von Jod, Brom, Fluor oder Astatin ist, Ar ein aromatischer oder heteroaromatischer Ring ist und R ein kurzkettiger Substituent ist, umfassend Phenolester, Imidester, Imidatester, Anhydrid, Acylsuccinimid, Aldehyd, Isothiocyanat, Thiol, Diazo, Hydrazin, Alkylhalogenid, Maleimid, Alkylimidester, Amidoalkylimidester, Alkylimidatester oder Amidoalkylimidatester, der den Ring, auf dem das Radioisotop substituiert ist, nicht stark aktiviert und eine funktionelle Gruppe besitzt, die zur Konjugation an Protein unter Bedingungen, die die biologische Aktivität des Proteins bewahren, geeignet ist, welches Verfahren die folgenden Schritte umfaßt:
Substitution eines Halogens auf einer haloaromatischen Verbindung, die die funktionelle Gruppe oder einen Vorläufer der funktionellen Gruppe trägt, durch eine organometallischen Gruppe, wobei die organometallische Gruppe aus Sn(n-Bu)₃ und SnMe₃ ausgewählt wird;
Entfernen der organometallischen Gruppe durch Halodemetallisierung und deren Substitution durch ein Radioisotop von Jod, Brom, Fluor oder Astatin;
wobei jeder Vorläufer der funktionellen Gruppe entweder vor oder nach dem Halodemetallisierungsschritt zu der funktionellen Gruppe konvertiert wird.

6. Verfahren nach Anspruch 5, wobei die haloaromatische Verbindung des Substitutionsschrittes durch das Halogen para- oder meta-substituiert ist.

7. Verfahren nach Anspruch 5 oder 6, wobei in dem Substitutionsschritt (i) die haloaromatische Verbindung entweder mit n-Butyl-Lithium bei -100°C oder mit Magnesium bei Raumtemperatur zur Reaktion gebracht wird und (ii) das Reaktionsprodukt aus (i) mit der organometallischen Gruppe zur Reaktion gebracht wird.

8. Verfahren nach einem der Ansprüche 5 bis 7, wobei in dem Substitutionsschritt die haloaromatische Verbindung mit Hexaalkyltin und Tetrakis(triphenylphosphin)-Palladium zur Reaktion gebracht wird.

9. Verfahren nach einem der Ansprüche 5 bis 7, wobei in dem Substitutionsschritt die haloaromatische Verbindung mit einem Trialkylstannyl-Alkali in Tetraglym bei 0°C zur Reaktion gebracht wird.

10. Verfahren nach einem der Ansprüche 5 bis 9, wobei der Substitutionsschritt ferner das Transmetallisieren der Aryltin-substituierten Verbindung mit einer organometallischen Gruppe, ausgewählt aus HgX₂, Hg(OAc)₂, BX₃ und BZ₃ umfaßt, wobei X Cl, Br oder I ist und Z Alkyl oder Alkoxy ist.

11. Verfahren zum Radiohalogenieren eines Proteins, das eine Reaktion von Amino, Thiol oder Hydroxygruppen auf dem Protein mit einer Verbindung nach einem der Ansprüche 1 bis 4 in einem wässerigen Medium umfaßt.

12. Verfahren nach Anspruch 11, wobei das Protein ausgewählt wird aus der Gruppe, bestehend aus Antigenbindungsfragmenten, Aminosäurepolymeren, Plasmaproteinen, Peptidhormonen und Antikörpern, besonders monoklonalen Antikörpern, die spezifisch mit zu Tumorzellen gehörigen Antigenen reaktionsfähig sind.

13. Protein, das durch ein Verfahren nach Anspruch 11 oder 12 hergestellt wurde.

14. Verfahren zur Synthetisierung eines radiohalogenierten kleinen Moleküls für das Markieren von Protein der Formel
*X - Ar - R
wobei *X ein Radioisotop von Jod, Brom, Fluor oder Astatin ist, Ar Phenyl oder ein heterocyclischer aromatischer Ring ist und R ein kurzkettiger Substituent ist, umfassend Phenolester, Imidester, Imidatester, Anhydrid, Acylsuccinimid, Aldehyd, Isothiocyanat, Thiol, Diazo, Hydrazin, Alkylhalogenid, Maleimid, Alkylimidester, Amidoalkylimidester, Alkylimidatester oder Amidoalkylimidatester, der den Ring, auf dem das Radioisotop substituiert ist, nicht stark aktiviert und eine funktionelle Gruppe besitzt, die zur Konjugation an Protein unter Bedingungen, die die biologische Aktivität des Proteins bewahren, geeignet ist, welches Verfahren folgende Schritte umfaßt:
(a) Bildung des Imidatesters eines entsprechenden Halobenzonitrils oder Haloarylalkyl-Nitrils;
(b) Substitution des Halogens durch eine organometallische Gruppe auf dem Produkt von Schritt (a), wobei die organometallische Gruppe aus Sn(n-BU)₃ und SnMe₃ ausgewählt wird und die Substitution das Reagieren des imidathältigen Produktes aus Schritt (a) mit Hexaalkyltin und Tetrakis(triphenylphosphin)-Palladium umfaßt;
(c) Halodemetallisierung des Produktes aus Schritt (b) zur Entfernung der organometallischen Gruppe und deren Substituierung durch ein Radioisotop von Jod, Brom, Fluor oder Astatin.

## Revendications

1. Composé répondant à la formule générale
*X - Ar - R
dans laquelle :
*X est un radio-isotope d'iode, de brome, de fluor ou d'astate;
Ar est un noyau aromatique ou hétéroaromatique; et
R est un substituant à chaîne courte comprenant un ester phénolique, imide-ester, imidate-ester, anhydride, acylsuccinimide, aldéhyde, isothiocyanate, thiol, diazo, hydrazine, alcoylhaloïde, maléimide, alcoyl-imide-ester, amido-alcoyl-imide-ester, alcoyl-imidate-ester ou amido-alcoyl-imidate-ester qui n'active pas fortement le noyau sur lequel le radio-isotope est substitué et qui possède un groupement fonctionnel capable de se conjuguer à une protéine dans des conditions qui préservent l'activité biologique de la protéine.

2. Composé suivant la revendication 1, dans lequel *X est I-123, I-125, I-131, Br-75, Br-76, Br-77, F-18 ou At-211.

3. Composé répondant à la formule
M - Ar - R
dans laquelle :
M est Sn(n-Bu)₃, SnMe₃, HgX₂, (X étant Cl, Br ou I), HgOAc, B(OH)₂ ou BZ₃ (Z étant alcoyle ou alcoxy);
Ar est un noyau aromatique ou hétéroaromatique; et
R est un substituant à chaîne courte comprenant un ester phénolique, imide-ester, imidate-ester, anhydride, acylsuccinimide, aldéhyde, isothiocyanate, thiol, diazo, hydrazine, alcoylhaloïde, maléimide, alcoyl-imide-ester, amido-alcoyl-imide-ester, alcoyl-imidate-ester ou amido-alcoyl-imidate-ester qui n'active pas fortement le noyau sur lequel le radio-isotope est substitué et qui possède un groupement fonctionnel capable de se conjuguer à une protéine dans des conditions qui préservent l'activité biologique de la protéine.

4. Composé suivant l'une quelconque des revendications précédentes, dans lequel *X est positionné en para ou en méta par rapport au substituant R.

5. Procédé de synthèse d'une petite molécule radio-halogénée pour le marquage des protéines, répondant à la formule
*X - Ar - R
dans laquelle *X est un radio-isotope d'iode, de brome, de fluor ou d'astate, Ar est un noyau aromatique ou hétéro-aromatique, et R est un substituant à chaîne courte comprenant un ester phénolique, imide-ester, imidate-ester, anhydride, acylsuccinimide, aldéhyde, isothiocyanate, thiol, diazo, hydrazine, alcoylhaloïde, maléimide, alcoyl-imide-ester, amido-alcoyl-imide-ester, alcoyl-imidate-ester ou amido- alcoyl-imidate-ester qui n'active pas fortement le noyau sur lequel le radio-isotope est substitué et qui possède un groupement fonctionnel capable de se conjuguer à une protéine dans des conditions qui préservent l'activité biologique de la protéine, procédé comprenant les étapes consistant :
- à substituer un groupement organométallique à un halogène sur un composé halo-aromatique comportant le groupement fonctionnel ou un précurseur du groupement fonctionnel, le groupement organométallique étant choisi parmi Sn(n-Bu)₃ et SnMe₃;
- à éliminer le groupement organométallique par halo-démétallisation et à lui substituer un radio-isotope d'iode, de brome, de fluor ou d'astate;
- chaque précurseur du groupement fonctionnel étant converti en groupement fonctionnel soit avant, soit après l'étape d'halo-démétallisation.

6. Procédé suivant la revendication 5, dans lequel le composé halo-aromatique est halo-substitué en para ou en méta.

7. Procédé suivant la revendication 5 ou 6, dans lequel l'étape de substitution comprend (i) la mise en réaction du composé halo-aromatique avec du n-butyl lithium à -100 °C ou avec du magnésium à température ambiante, et (ii) la mise en réaction du produit réactionnel de (i) avec le groupement organométallique.

8. Procédé suivant l'une quelconque des revendications 5 à 7, dans lequel l'étape de substitution comprend la mise en réaction du composé halo-aromatique avec de l'hexaalkyltine et du tétrakis(triphénylphosphine)palladium.

9. Procédé suivant l'une quelconque des revendications 5 à 7, dans lequel l'étape de substitution comprend la mise en réaction du composé halo-aromatique avec un alcali trialkylstannyl dans du tétraglyme à 0 °C.

10. Procédé suivant l'une quelconque des revendications 1 à 9, dans lequel l'étape de substitution comprend la transmétallisation du composé substitué aryltine avec un groupement organométallique choisi parmi HgX₂, Hg(OAC)₂, BX₃ et BZ₃, dans lequel X est CI, Br ou I, et Z est alcoyle ou alcoxy.

11. Procédé de radio-halogénation d'une protéine, comprenant l'étape consistant à faire réagir en milieu aqueux des groupements amino, thiol ou hydroxy sur ladite protéine avec un composé conforme à l'une quelconque des revendications 1 à 4.

12. Procédé suivant la revendication 11, dans lequel ladite protéine est choisie parmi le groupement constitué par des fragments liant les antigènes, des polymères d'acides aminés, des protéines plasmatiques, des hormones peptidiques, et des anticorps, en particulier des anticorps monoclonaux réagissant spécialement avec des antigènes associés aux cellules tumorales.

13. Protéine préparée par un procédé conforme aux revendications 11 ou 12.

14. Procédé de synthèse d'une petite molécule radio-halogénée pour le marquage des protéines, répondant à la formule
*X - Ar - R
dans laquelle *X est un radio-isotope d'iode, de brome, de fluor ou d'astate, Ar est un noyau aromatique phénylique ou hétérocyclique, et R est un substituant à chaîne courte comprenant un ester phénolique, imide-ester, imidate-ester, anhydride, acylsuccinimide, aldéhyde, isothiocyanate, thiol, diazo, hydrazine, alcoylhaloïde, maléimide, alcoyl-imide-ester, amido-alcoyl-imide-ester, alcoyl-imidate-ester ou amido-alcoyl-imidate-ester qui n'active pas fortement le noyau sur lequel le radio-isotope est substitué et qui possède un groupement fonctionnel capable de se conjuguer à une protéine dans des conditions qui préservent l'activité biologique de la protéine, procédé comprenant les étapes consistant :
(a) à former l'imidate-ester d'un halobenzonitrile ou d'un haloarylalcoyl nitrile correspondant;
(b) à substituer un groupement organométallique au halogène dans le produit issu de l'étape (a), le groupement organométallique étant choisi parmi Sn(n-Bu)₃ et SnMe₃, et la substitution comprenant la mise en réaction du produit de l'étape (a) contenant l'imidate avec de l'hexaalkyltine et du tétrakis(triphénylphosphine)-palladium;
(c) à halo-démétalliser le produit issu de l'étape (b) afin d'éliminer le groupement organométallique et de lui substituer un radio-isotope d'iode, de brome, de fluor ou d'astate.
